# FASCICULE DE BREVET EUROPEEN

(11) **EP 3 293 715 B1**
(45) Date de publication et mention de la délivrance du brevet: **06.03.2019**
(21) Numéro de dépôt: 17188171.7
(22) Date de dépôt: 28.08.2017
(51) Int. Cl.: G08B 13/19, G01J 5/10

(54) **ÉQUIPEMENT AUTONOME DE SURVEILLANCE DE ZONE PAR CAPTEUR INFRAROUGE PASSIF MULTIZONE**
AUTONOME AUSRÜSTUNG ZUR BEREICHSÜBERWACHUNG MITHILFE EINES PASSIVEN MULTIZONEN-INFRAROTSENSORS
SELF-CONTAINED SYSTEM FOR MONITORING AN AREA USING A MULTI-ZONE PASSIVE INFRARED SENSOR

(30) Priorité: 01.09.2016 FR 1658140
(43) Date de publication de la demande: 14.03.2018
(73) Titulaire: Freebox, 75008 Paris (FR)
(72) Inventeur: KHAIRY, Mehdi, 75008 PARIS (FR)
(74) Mandataire: Dupuis-Latour, Dominique

(56) Documents cités:
- WO-A1-2011/005074
- WO-A1-2013/179201
- JP-A- 2011 102 670
- US-A- 5 101 194
- US-A1- 2016 033 334

## Description

L'invention concerne un équipement autonome de surveillance de zone mettant en oeuvre un capteur de type infrarouge passif (PIR), qui mesure le rayonnement lumineux IR produit par des "objets chauds" (sources de chaleur interprétées comme étant des individus en déplacement) se trouvant dans son champ de vision.

Les capteurs de ce type sont couramment utilisés comme détecteurs de présence, une augmentation du rayonnement détecté étant interprétée comme consécutive à l'apparition d'une personne dans le champ de vision du capteur, ce qui permet de commander l'allumage d'un éclairage, de délivrer un signal d'alerte d'intrusion, etc.

Le champ de vision du détecteur peut être élargi par des moyens optiques en associant au capteur une lentille de Fresnel ou un réflecteur, mais en tout état de cause la zone couverte est surveillée de façon globale, indifférenciée.

À l'échelle d'un local comportant plusieurs pièces (maison ou appartement, bureaux, musées, salles d'exposition, etc.), les systèmes de détection d'intrusion peuvent mettre en oeuvre une technique de *tracking* (suivi) des objets chauds à l'échelle du local. Pour cela, il convient d'équiper chaque pièce du local d'un détecteur PIR et/ou de munir les accès potentiels vers l'extérieur (portes, fenêtres) de capteurs périmétriques reliés à une centrale d'alarme. À partir de ces informations, le système analyse les déplacements des objets détectés par les capteurs PIR pour extrapoler un déplacement de pièce en pièce, et discriminer entre déplacements internes au local (ceux d'un occupant autorisé ou d'un gardien passant d'une pièce à l'autre) et déplacements d'origine inconnue, laissant suspecter une intrusion.

Ainsi, le US 2015/0347910 A1 décrit une habitation équipée d'une multitude de détecteurs répartis dans l'espace à surveiller, afin d'analyser finement les déplacements des personnes présentes dans l'habitation.

Cette technique, outre la nécessité de placer des détecteurs PIR et/ou des capteurs périmétriques dans toutes les pièces susceptibles d'être traversées par un occupant légitime des lieux, présente plusieurs limites.

En premier lieu, les capteurs PIR doivent être placés de manière que le système puisse s'assurer que les objets chauds ne passent pas dans une "zone d'ombre" lors du passage d'une pièce à l'autre. Il peut s'agir d'une zone qui n'est dans le champ de vision d'aucun des détecteurs PIR, ou bien d'un couloir ou vestibule non muni d'un détecteur PIR. Si la personne traverse la zone d'ombre, il est impossible de savoir si l'"objet chaud" détecté dans une pièce est apparu dans cette pièce en venant de l'extérieur (intrusion par une fenêtre), ou s'il se déplace en intérieur, depuis une zone autorisée du local.

Cet inconvénient peut être pallié en utilisant non plus un simple détecteur PIR mais une caméra video IR couplée à un processeur d'image programmé pour réaliser sur cette image un suivi de cible (*tracking* video). Mais cette technique implique un coût bien plus élevé que celui d'un simple détecteur PIR, avec toujours la nécessité de relier la caméra à une centrale d'alarme assurant le regroupement des différentes informations et leur analyse.

Un autre inconvénient des détecteurs PIR conventionnels est qu'ils peuvent être leurrés par des sources de chaleur fixes mais émettant un rayonnement variable par intermittence, par exemple des radiateurs électriques thermostatés : l'enclenchement du radiateur provoque une montée rapide en température de celui-ci détectable par le capteur PIR, qui ne saura pas discriminer entre l'entrée d'un objet chaud mobile dans son champ de vision, et la montée en température d'un objet froid fixe déjà présent dans ce champ de vision.

La présente invention vise à résoudre l'ensemble de ces difficultés, en proposant un équipement autonome de surveillance de zone mettant en oeuvre un capteur infrarouge passif capable d'effectuer un suivi d'objets chauds (sources de chaleur détectées par le capteur) à l'échelle d'une pièce, et ceci de manière entièrement autonome.

L'idée de base de l'invention réside dans l'utilisation d'un capteur PIR de type PIR multizone, produisant une image bidimensionnelle formée d'une matrice (grille) de cases correspondant à des zones élémentaires adjacentes de la zone à surveiller, avec pour chaque case un signal respectif de présence/absence de source de chaleur à un instant donné.

Une source de chaleur détectée dans la zone à surveiller pourra être ainsi suivie de façon précise, sur une grille représentative de la topographie de la zone à surveiller.

Le suivi précis, selon l'invention, de l'objet chaud au sein de la pièce permettra notamment de déterminer d'où vient l'objet apparu, et de discriminer entre origine autorisée (par exemple porte intérieure) et origine suspecte (par exemple fenêtre).

Le but de l'invention est de mettre à disposition un tel équipement qui présente les avantages suivants :
- coût d'installation réduit, beaucoup moins élevé qu'une caméra infrarouge couplée à un système de suivi de cible sur image video ;
- absence de détecteurs périmétriques, devenus inutiles ;
- équipement unique pour une pièce donnée ; et
- possibilité de ne mettre un équipement que dans les pièces ayant un accès vers l'extérieur (porte ou fenêtre), les pièces sans accès extérieur telles que vestibule ou couloir n'ayant pas besoin d'être pourvues d'un détecteur ;
- possibilité d'autonomie complète, sans liaison du détecteur à une centrale d'alarme ou, si une centrale d'alarme est utilisée, possibilité de déclenchement d'une alerte même en cas de déconnexion de la centrale ;
- possibilité de laisser l'équipement en service même en présence d'occupants légitimes circulant dans le local, ce qui permet par exemple de laisser l'alarme enclenchée la nuit, dans la mesure où les déplacements internes au local seront détectés comme tels et ne seront pas considérés comme suspects ;
- immunité aux sources de chaleur variable fixes telles que des radiateurs thermostatiques : ces sources, étant fixes, ne seront associées à aucun déplacement et pourront être ignorées dans la surveillance de la zone.

En ce qui concerne le capteur PIR multizone proprement dit, il s'agit d'un capteur en lui-même connu, par exemple d'après le US 7 728 297 B2 qui décrit un composant électronique utilisable pour réaliser un tel capteur.

Les capteurs de ce type sont actuellement utilisés pour la commande intelligente de portes automatiques, pour le contrôle et le réglage d'installations de conditionnement d'air, etc.

Dans le domaine de la sécurité, ils peuvent être utilisés dans des applications de reconnaissance de forme utilisant l'image thermographique (silhouette d'un individu) formée sur la surface sensible du capteur. Les US 2012/0038778 A1 et US 5 283 551 A décrivent deux dispositifs de ce type, opérant un *scanning,* respectivement 2D ou 1D, de l'image thermographique produite par le capteur. L'algorithme de reconnaissance de forme permet de discriminer la nature de l'objet chaud qui vient à être détecté en fonction de sa silhouette, mais n'a pas pour but de suivre les déplacements de cet objet.
le JP 2011-102670 A divulgue un équipement de ce type, où le capteur PIR multizone produit une image 2D formée d'une grille de cases élémentaires et où un processeur analyse cette image pour déterminer la présence ou l'absence d'une source de chaleur dans chaque case de la grille afin d'émettre le cas échéant une alarme.

Le US 5 101 194 A décrit un équipement fonctionnant selon un principe semblable.

La présente invention propose un équipement autonome de surveillance de zone comprenant plus précisément, de manière en elle-même connue notamment d'après le JP 2011-102670 A précité :
- un capteur infrarouge passif, apte à être monté en un point prédéterminé en visibilité de la zone à surveiller, ce capteur délivrant une séquence de signaux de chaleur détectée à l'intérieur de la zone à surveiller,
   ce capteur étant un capteur de type multizone produisant une image bidimensionnelle formée d'une grille de cases correspondant à des zones élémentaires adjacentes de la zone à surveiller, avec pour chaque case un signal de chaleur respectif ;
- des moyens d'analyse des signaux de chaleur de chaque case de la grille et de délivrance, pour chaque signal de la séquence et pour chaque case de la grille, d'un indicateur de présence d'une source de chaleur représentatif d'une cible détectée dans la case correspondante ; et
- un processeur de données, apte à analyser les signaux délivrés par le capteur pour discriminer entre présence et absence d'une source de chaleur à l'intérieur de la zone à surveiller en fonction de critères prédéterminés et, en présence d'une cible détectée dans au moins une case de la grille, à délivrer conditionnellement en sortie une alerte.

De façon caractéristique de l'invention :
- les cases de la grille sont classifiées en cases autorisées et en cases sécurisées ; et
- le processeur de données est configuré de manière à délivrer conditionnellement ladite alerte en présence d'une cible détectée dans au moins une case de la grille en fonction de i) la position sur la grille de la cible détectée et ii) de la classification en case autorisée ou en case sécurisée de la case où cette cible est détectée.

Dans un mode de réalisation préférentiel, l'équipement comprend une mémoire de données interfacée au processeur, apte à stocker un historique des états successifs des indicateurs de présence d'une source de chaleur sur la grille, et le processeur de données est en outre configuré de manière à exécuter :
* un suivi de la cible détectée, par mise en oeuvre d'un algorithme à cases adjacentes avec détermination du trajet de la cible suivie, sur la grille, à partir dudit historique des états successifs des indicateurs de présence d'une source de chaleur sur la grille ; et
* la délivrance conditionnelle de ladite alerte en fonction i) dudit trajet de la cible suivie et ii) de la classification en cases autorisées ou en cases sécurisées des cases successivement occupées par la cible sur ce trajet.

Selon diverses caractéristiques subsidiaires avantageuses de ce mode de réalisation préférentiel :
- le processeur de données est configuré de manière à délivrer conditionnellement ladite alerte par, en cas de cible apparaissant dans une case sécurisée, analyse du voisinage de cette case pour déterminer si, dans l'état antérieur de la grille stocké dans la mémoire, ladite cible avait été détectée dans une case voisine sécurisée, avec dans ce cas délivrance de l'alerte, o dans une case voisine autorisée, avec dans ce cas absence de délivrance d'une alerte ;
- les cases de la grille sont classifiées en cases autorisées, en cases sécurisées et en cases de traversée, et en cas d'absence d'état antérieur stocké dans la mémoire, le processeur de données est configuré de manière à délivrer conditionnellement ladite alerte par délivrance de l'alerte si la cible est détectée dans une case sécurisée, ou absence de délivrance d'alerte si la cible est détectée dans une case de traversée ;
- en cas de pluralité de cibles détectées, le processeur de données est configuré de manière à délivrer conditionnellement ladite alerte par, pour chacun des états successifs des indicateurs de présence d'une source de chaleur sur la grille, comptage du nombre de cibles détectées simultanément présentes dans la zone à surveiller et, en cas de cible(s) apparaissant dans une case sécurisée puis transitant vers une case autorisée lors d'une transition desdits états successifs, délivrance de ladite alerte en cas de changement du nombre de cibles compté avant et après ladite transition.

On va maintenant décrire un exemple de mise en oeuvre de la présente invention, en référence aux dessins annexés où les mêmes références désignent d'une figure à l'autre des éléments identiques ou fonctionnellement semblables.
La Figure 1 est une représentation schématique de l'équipement de surveillance de l'invention, avec le capteur PIR multizone dont le champ de vision couvre la zone à surveiller.
Les Figures 2 et 3 servent à illustrer la mise en oeuvre de l'algorithme à cases adjacentes, avec superposition de grilles dynamiques, produites par le capteur et changeant au fil des détections de cibles et du déplacement de ces cibles, et d'une grille statique conservée en mémoire, préalablement paramétrée selon la nature des zones à protéger ou non de la zone à surveiller.
Les Figures 4 et 5 illustrent des exemples de mise en oeuvre de l'équipement de surveillance de l'invention, selon divers scénarios de trajet d'un utilisateur ou d'un intrus dans la zone à surveiller.
Les Figures 6a et 6b illustrent un perfectionnement de la technique de l'invention, permettant de détecter une anomalie dans le nombre de personnes évoluant simultanément dans les limites de la zone à surveiller.

On va maintenant décrire un exemple détaillé de réalisation d'un équipement autonome de surveillance de zone selon l'invention, ainsi qu'un exemple de mise en oeuvre de l'algorithme de détection d'intrusion mis en oeuvre au sein de cet équipement.

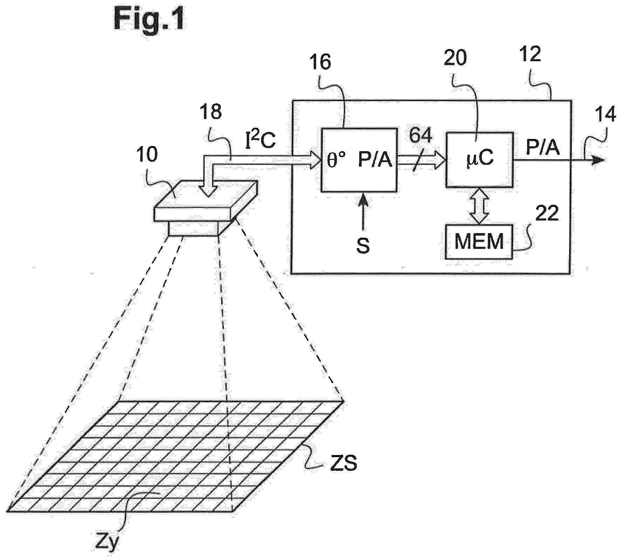

Sur la Figure 1, la référence 10 désigne un capteur infrarouge de type multizone qui est, comme on l'a expliqué plus haut en introduction, un capteur de type infrarouge passif (PIR) comprenant un système optique projetant sur un capteur 2D une image de la zone à surveiller ZS.

L'image 2D ainsi formée se présente sous forme d'une matrice (grille) de i x j zones élémentaires de capteur, correspondant chacune à une zone élémentaire Zij de la zone à surveille ZS. Le capteur délivre pour chaque zone élémentaire de capteur un signal de température correspondant, permettant ainsi de détecter la présence d'une source de chaleur spécifiquement dans chacune des zones Zij de la zone à surveiller ZS.

Un tel capteur PIR multizone est en lui-même connu, par exemple d'après le US 7 728 297 B2 précité, et ne sera pas décrit plus en détail ici. Pour la mise en oeuvre de l'invention, un composant approprié est par exemple le capteur Panasonic *Infrared Array Sensor Grid-EYE (AMG88),* qui est un capteur multizone avec une grille de 8 x 8 = 64 zones élémentaires, chacune correspondant à un angle de vision d'environ 5,6° dans les deux directions. Ce composant délivre pour chaque zone élémentaire un signal numérique de température de la zone élémentaire Zij correspondante avec une fréquence de rafraichissement d'une fois par seconde. L'ensemble se présente sous forme d'un boitier compact, qui peut être par exemple placé au centre de la pièce, au plafond.

La référence 12 désigne un circuit de traitement et d'analyse des données délivrées par le capteur 10. Ce circuit peut être disposé dans un boitier monobloc intégrant également le capteur 10, ou bien placé à distance de celui-ci.

Le circuit 12 délivre en sortie un signal 14 d'alerte, qui est un signal de présence/absence (P/A) de cible non autorisée, globalement dans la zone à surveiller ZS, c'est-à-dire un signal unique d'alerte pour toute la zone.

Pour élaborer ce signal d'alerte 14, le circuit 12 reçoit les 8 x 8 = 64 signaux de chaleur, qui sont appliqués à un étage comparateur 16 couplé au capteur multizone 10, par exemple par un bus I²C 18. Chaque signal de chaleur, représentatif d'une température dans une zone élémentaire Zij, est comparé à un seuil S pour donner un signal individuel de présence/absence de cible dans chacune de ces zones élémentaires respectives Zij.

On dispose ainsi en sortie de l'étage 16 d'un ensemble de données, qui peut être représenté sous forme d'une matrice de i x j cases Cij, chacune de ces cases étant associée à un signal individuel de présence/absence de cible dans la zone correspondante élémentaire Zij. Cet indicateur est un indicateur binaire indiquant la présence ou non d'une source de chaleur, selon que le signal de température dans la zone Zij se trouve au-dessus ou au-dessous du seuil S, respectivement.

La matrice de données délivrées par l'étage 16 est analysée par un microcontrôleur 20, et les états successifs de la matrice, au moins l'état précédant l'itération courante, sont stockés dans une mémoire de données 22 de manière à disposer d'un historique reflétant les déplacements éventuels, d'une itération à la suivante, de la source de chaleur d'une case à l'autre de la zone à surveiller.

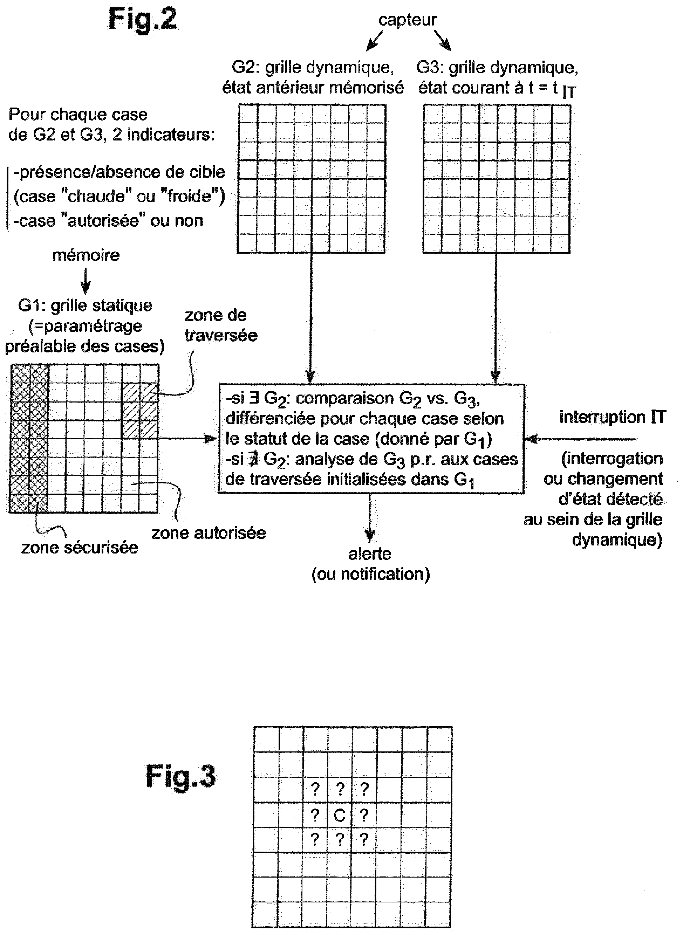

On va maintenant exposer, en référence aux Figures 2 et 3, la mise en oeuvre de l'algorithme de détection à cases adjacentes selon l'invention. Cet algorithme de détection repose sur l'analyse de trois grilles correspondant aux différentes zones du capteur, avec :
- une grille statique G1, paramétrée une fois pour toutes par l'utilisateur en fonction de la configuration des lieux. Cette grille statique G1 est conservée telle quelle dans la mémoire, une fois paramétrée elle n'est plus modifiée ;
- deux grilles dynamiques G2 et G3, modifiées à chaque itération de l'algorithme. La grille G3 contient l'état de la grille à un instant donné t = t_{IT}, tandis que la grille G2 comprend l'état antérieur de cette même grille, mémorisé à l'itération précédente - c'est-à-dire qu'à chaque nouvelle itération la grille G3 ancienne devient la nouvelle grille G2, et ainsi de suite.

Dans la description que l'on va donner, on utilise seulement deux grilles dynamiques G2 et G3. Il est toutefois possible de conserver en mémoire un nombre plus important de grilles dynamiques, par exemple la grille correspondant à l'état de l'avant-dernière itération, de l'antépénultième itération, etc., de manière à non seulement connaitre l'état précédent, mais aussi disposer d'un historique complet de l'évolution de la grille dynamique sur une période plus longue.

Les grilles dynamiques G2 et G3 comprennent, pour chacune des i x j cases, deux indicateurs :
- présence/absence de cible, c'est-à-dire un indicateur spécifiant si la case correspondante est une case "chaude" ou "froide" (une case "chaude" étant une case où est détectée une source de chaleur dont la température mesurée est supérieure au seuil S prédéterminé) ; et
- un indicateur spécifiant si la case est une case "autorisée" ou non, cet indicateur étant modifiable par l'algorithme d'analyse qui sera décrit plus bas.

La grille statique G1 correspond à un paramétrage préalable fonction de la topographie particulière de la zone à surveiller ZS.

Chacune des cases est classifiée essentiellement selon deux types de zones :
- "zone sécurisée" ZXi, correspondant à une zone où il existe un risque d'intrusion et qui doit donc faire l'objet d'une surveillance permanente : typiquement la zone d'une pièce située à proximité d'une fenêtre ou d'une porte avec un accès extérieur ; et
- "zone autorisée" ZAi, pour les cases qui ne sont pas dans une zone sécurisée : il s'agit d'une zone où la présence d'une source de chaleur n'est a *priori* pas suspecte s'il n'y a pas eu d'intrusion précédemment détectée, par exemple la zone au centre d'une pièce, zone sans fenêtre ni accès extérieur, où l'utilisateur autorisé pourra évoluer librement sans qu'une alarme ne se déclenche.

Pour la prise en compte du cas particulier de la première itération, c'est-à-dire où il n'existe pas encore de grille dynamique G2, il est prévu dans la classification des cases un troisième type de zone, à savoir :
- "zone de traversée" ZTi, qui est une zone située au sein de la "zone autorisée" pour laquelle un accès depuis l'extérieur provient nécessairement d'un utilisateur autorisé : il s'agit typiquement d'une zone autour d'une porte intérieure donnant sur un couloir, un vestibule, etc., sans accès vers l'extérieur.

Cette sous-classification des cases de zone autorisée en cases de zone de traversée permet, comme on l'expliquera plus bas, d'initialiser en l'absence d'historique connu la validité du statut de la grille dynamique.

On va exposer maintenant la mise en oeuvre de l'algorithme à cases adjacentes de la grille dynamique délivrée par le capteur PIR multizone, permettant de déterminer une intrusion éventuelle dans la zone à surveiller ZS.

Cet algorithme est exécuté de façon itérative, et déclenché par une interruption IT, qui peut être soit une interruption de *polling* générée à intervalles réguliers, soit une interruption déclenchée sur un changement d'état détecté au sein de la grille dynamique, c'est-à-dire lorsque l'on détecte que l'état d'une grille dynamique délivré par le capteur à la fréquence de rafraichissement diffère de l'état antérieur de cette même grille dynamique.

Lorsqu'une interruption IT est activée, l'algorithme compare les grilles G2 (état antérieur mémorisé) et G3 (état courant) et recherche, pour chaque case, s'il y a eu modification de l'indicateur de présence/absence de cible. Pour les cases dont l'indicateur est passé de "absence" à "présence" c'est-à-dire les cases qui sont passées à "case chaude" depuis le dernier état, l'algorithme examine, en fonction du paramétrage de la grille statique G1, si la case en question se trouve dans une zone sécurisée, ou bien dans une zone autorisée ou de traversée. Si cette case se trouve dans une zone autorisée ou de traversée, alors l'indicateur correspondant dans la grille G3 est positionné à "case autorisée".

En revanche, si la case en question se trouve dans une zone sécurisée (cf. illustration de la Figure 3), il convient de déterminer si, dans cette grille G2, l'une des cases adjacentes était une "case autorisée", c'est-à-dire, en d'autres termes, si la source de chaleur détectée en G3 dans une zone sécurisée provenait en fait d'une "case autorisée". Dans ce cas, l'indicateur de la case est positionné à "case autorisée".

Dans le cas où l'algorithme ne trouve dans G2 aucune case adjacente autorisée, alors cette case est a *priori* suspecte.

Pour discriminer le cas particulier d'une source de chaleur provenant par exemple de l'enclenchement d'un radiateur thermostatique R (qui n'est donc pas une source mobile), le même algorithme de gestion par cases adjacentes est appliqué de manière à détecter si, au cours de l'itération suivante, il y a eu ou non mouvement de la case où la source de chaleur avait été détectée, vers l'une des cases adjacentes. Dans l'affirmative, l'alarme peut être déclenchée ; dans la négative, il s'agit d'une source de chaleur immobile, qui ne révèle pas une intrusion.

L'étape finale consiste à fusionner les deux grilles G2 et G3 en gardant les cases "chaudes" de la grille G3 et en positionnant comme "cases froides" les cases de la grille G2 qui étaient précédemment des cases "chaudes", et qui sont devenues "froides".

La mise en oeuvre de l'algorithme ci-dessus présuppose la connaissance d'un état antérieur, pour détecter s'il y a eu ou non mouvement d'une source chaude d'une case adjacente entre deux itérations successives.

Si l'état antérieur (grille G2) n'est pas disponible, comme cela est le cas à la mise en route du système ou pour toute autre raison, l'algorithme analyse la grille dynamique G3 délivrée par le capteur et initialise en "case autorisée" chaque case où une source chaude a été détectée, si cette case est située à l'intérieur de la "zone de traversée", c'est-à-dire si la source chaude correspond à la présence d'une cible dont on est certain qu'il s'agit d'un utilisateur autorisé (puisque celui-ci vient par exemple d'une porte de communication intérieure du local, et n'est donc pas un intrus).

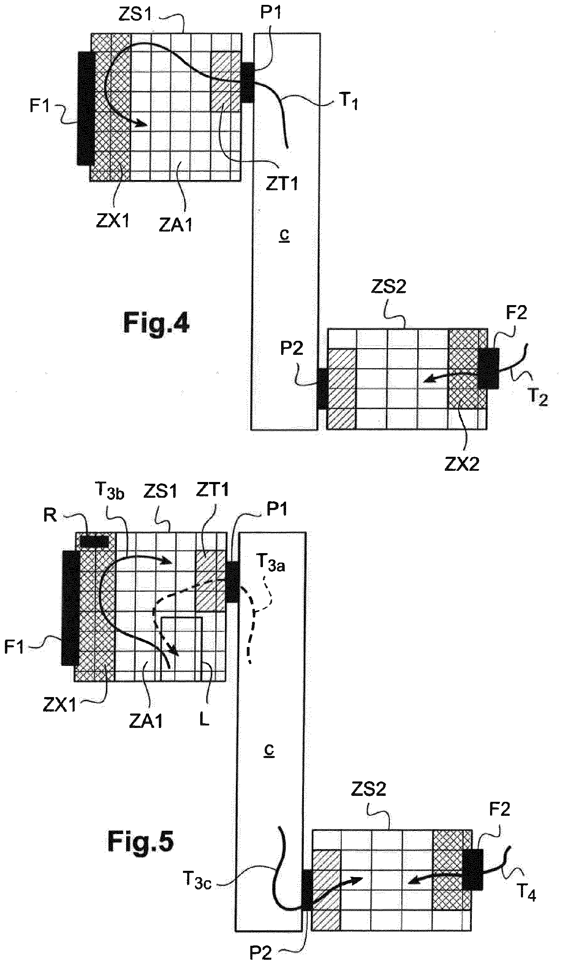

Les Figures 4 et 5 illustrent les résultats obtenus par la mise en oeuvre de l'équipement de surveillance de l'invention, selon divers scénarios de trajet d'un utilisateur ou d'un intrus dans la zone à surveiller.

Sur ces figures, on a représenté un local (habitation, local commercial, musée, etc.) comprenant deux zones à surveiller ZS1 et ZS2, chacune munie d'un équipement autonome de surveillance selon l'invention tel que celui décrit en référence à la Figure 1.

Ces deux zones à surveiller ZS1 et ZS2 débouchent dans un couloir C, par l'intermédiaire de portes intérieures respectives P1 et P2. Les zones à surveiller ZS1 et ZS2 comportent par ailleurs des fenêtres respectives F1 et F2 donnant sur l'extérieur.

De fait, la détection d'une entrée dans la zone ZS1 ou ZS2 par la fenêtre F1 ou F2 sera le fait d'un intrus et devra donc déclencher une alarme, tandis qu'une entrée via les portes intérieures P1 et P2 ne pourra être le fait que d'un utilisateur normal, et ne devra pas déclencher d'alarme.

Le premier scénario, correspondant au trajet T1 de la Figure 4, est celui où le capteur détecte l'apparition d'une source de chaleur apparaissant sur la zone ZT1 située à côté de la porte intérieure P1, zone qui est une zone de traversée donc une zone permise,. La source détectée sera affectée dans la grille dynamique d'un indicateur "case autorisée", qui sera conservé au cours de tous les déplacements de case en case dans la pièce ZS1, même si la source de chaleur passe dans la zone sécurisée ZS1, puisque l'indicateur "case autorisée" n'aura pas été remis à zéro au fil des déplacements du trajet T1.

Le second scénario est celui correspondant au trajet T2 de la Figure 4 : dans ce cas, le capteur détecte une source de chaleur mobile venant d'une zone sécurisée ZX2, et sans historique de "case autorisée" (état antérieur de la grille dynamique G2). Il s'agit donc d'un trajet interdit, révélateur d'une intrusion, et l'alarme doit être déclenchée.

Le troisième scénario, illustré par les trajets T3a et T3b de la Figure 5, correspond à un habitant, qui s'est allongé sur un lit L et s'est endormi. À son réveil, le capteur détecte un déplacement de source chaude, mais ceci ne doit pas déclencher d'alarme d'intrusion. Comme l'on dispose d'un historique de trajet (trajet initial T3a d'entrée dans la pièce et de déplacement jusqu'au lit), les indicateurs des cases sont initialisés à "case autorisée" et conservés tels quels jusqu'au réveil. Le trajet T3b après réveil comportera des déplacements qui proviendront d'une case avec un indicateur "case autorisée", ce qui ne déclenchera pas d'alarme même si la personne évolue en passant par la zone sécurisée ZX1.

La Figure 5 illustre également le cas d'un radiateur R fonctionnant par intermittence, situé dans la zone sécurisée ZX1. Les variations de température de ce radiateur vont produire régulièrement des détections de source de chaleur dans cette zone sécurisée ZX1, mais en l'absence de déplacement de la source de chaleur détectée, aucune alarme d'intrusion ne sera produite (l'équipement peut éventuellement délivrer un signal de notification correspondant à cette situation, mais sans déclenchement d'alarme).

Le quatrième scénario, illustré Figure 5 par les trajets T3c et T4, illustre la possibilité de laisser l'équipement de surveillance activé même en présence des habitants. Ainsi, si l'apparition d'une source de chaleur est détectée dans la zone sécurisée ZX2, mais peut être rattachée à un historique autorisé (correspondant par exemple au trajet T3c d'un habitant venant du couloir C) aucune alarme ne sera déclenchée. En revanche, il sera possible de détecter dans le même temps une source de chaleur mobile dans cette même zone, venant de l'extérieur sans autorisation (trajet T4), conduisant au déclenchement d'une alarme d'intrusion. Ce cas de figure (source mobile avec/sans historique autorisé) est utile notamment pour la surveillance de chambres d'enfants, ou pour des animaux se déplaçant dans une maison.

On notera que la détection d'intrusion, dans ce scénario comme dans les autres, ne nécessite en aucune façon la pose de détecteurs périmétriques aux portes intérieures P1 et P2, ces détecteurs périmétriques étant remplacés par la mémorisation d'un historique des états successifs de la grille dynamique délivrée par le capteur.

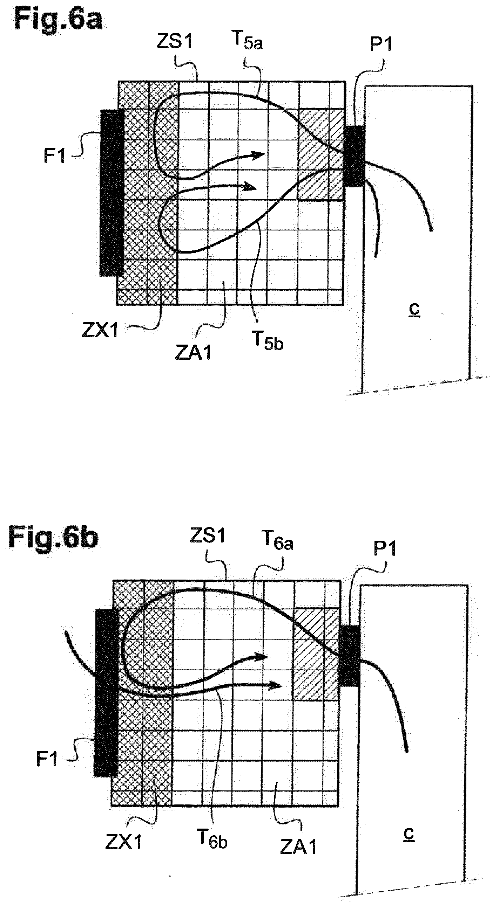

Les Figures 6a et 6b illustrent un perfectionnement de la technique que l'on vient d'exposer, pour la détection d'une anomalie dans le nombre de personnes évoluant simultanément dans les limites de la zone à surveiller. L'historique des états successifs de la grille dynamique délivrée par le capteur permet, sur une durée suffisamment longue, de garder une trace de toutes les sources de chaleur détectées et de leurs déplacements, ce qui permet d'extrapoler le nombre de sources (c'est-à-dire de personnes) simultanément présentes dans la zone à surveiller.

Dans le cas illustré Figure 6a, deux personnes sont entrées successivement dans la zone à surveiller ZS1, par les trajets T5a et T5b. Même si elles passent par la zone sécurisée ZX1, avant et après le passage dans cette zone l'équipement déterminera qu'il y a toujours deux personnes présentes dans la pièce.

En revanche, dans le cas illustré Figure 6b, une unique personne est entrée dans la pièce (trajet T6a), puis passe dans la zone sécurisée ZX1. L'équipement détermine ensuite, après ce passage, la présence de deux personnes, et non plus d'une, dans la zone autorisée ZA1. Cette situation est considérée comme anormale, et une alarme ou une notification est alors produite. Cette situation correspond par exemple à celle d'un local surveillé par un gardien (donc une personne autorisée) qui passe près de la fenêtre F1 pour faire entrer un comparse. Au sortir de la zone sécurisée ZX1, les deux individus se trouveront dans la zone autorisée ZA1, ce qui ne devrait normalement pas produire de déclenchement d'alarme. Mais comme l'historique des états successifs de la grille dynamique révèle, par comptage, qu'antérieurement il n'y avait qu'une seule personne dans la pièce alors que maintenant il s'en trouve deux, la situation peut être révélée et signalée par l'alarme.

## Revendications

1. Un équipement autonome de surveillance de zone, comprenant :
- un capteur infrarouge passif (10), apte à être monté en un point prédéterminé en visibilité de la zone à surveiller (ZS), ce capteur délivrant une séquence de signaux de chaleur détectée à l'intérieur de la zone à surveiller,
ce capteur étant un capteur de type multizone produisant une image bidimensionnelle formée d'une grille de cases correspondant à des zones élémentaires (Zij) adjacentes de la zone à surveiller (ZS), avec pour chaque case un signal de chaleur respectif ;
- des moyens (16) d'analyse des signaux de chaleur de chaque case de la grille et de délivrance, pour chaque signal de la séquence et pour chaque case de la grille, d'un indicateur de présence d'une source de chaleur représentatif d'une cible détectée dans la case correspondante ; et
- un processeur de données (20), apte à analyser les signaux délivrés par le capteur pour discriminer entre présence et absence d'une source de chaleur à l'intérieur de la zone à surveiller en fonction de critères prédéterminés et, en présence d'une cible détectée dans au moins une case de la grille, à délivrer conditionnellement en sortie (14) une alerte,
**caractérisé en ce que** :
- les cases de la grille sont classifiées en cases autorisées et en cases sécurisées ; et
- le processeur de données est configuré de manière à délivrer conditionnellement ladite alerte en présence d'une cible détectée dans au moins une case de la grille en fonction de i) la position sur la grille de la cible détectée et ii) de la classification en case autorisée ou en case sécurisée de la case où cette cible est détectée.

2. L'équipement autonome de la revendication 1, dans lequel :
- l'équipement comprend une mémoire de données (22) interfacée au processeur, apte à stocker un historique des états successifs des indicateurs de présence d'une source de chaleur sur la grille ; et
- le processeur de données est en outre configuré de manière à exécuter :
* un suivi de la cible détectée, par mise en oeuvre d'un algorithme à cases adjacentes avec détermination du trajet de la cible suivie, sur la grille, à partir dudit historique des états successifs des indicateurs de présence d'une source de chaleur sur la grille ; et
* la délivrance conditionnelle de ladite alerte en fonction i) dudit trajet de la cible suivie et ii) de la classification en cases autorisées ou en cases sécurisées des cases successivement occupées par la cible sur ce trajet.

3. L'équipement autonome de la revendication 2, dans lequel le processeur de données est configuré de manière à délivrer conditionnellement ladite alerte par :
* en cas de cible apparaissant dans une case sécurisée, analyse du voisinage de cette case pour déterminer si, dans l'état antérieur de la grille stocké dans la mémoire, ladite cible avait été détectée :
• dans une case voisine sécurisée, avec dans ce cas délivrance de l'alerte, ou
• dans une case voisine autorisée, avec dans ce cas absence de délivrance d'une alerte.

4. L'équipement autonome de la revendication 2, dans lequel :
- les cases de la grille sont classifiées en cases autorisées, en cases sécurisées et en cases de traversée ; et
- en cas d'absence d'état antérieur stocké dans la mémoire, le processeur de données est configuré de manière à délivrer conditionnellement ladite alerte par :
* délivrance de l'alerte si la cible est détectée dans une case sécurisée, ou
* absence de délivrance d'alerte si la cible est détectée dans une case de traversée.

5. L'équipement autonome de la revendication 2, dans lequel, en cas de pluralité de cibles détectées, le processeur de données est configuré de manière à délivrer conditionnellement ladite alerte par :
* pour chacun des états successifs des indicateurs de présence d'une source de chaleur sur la grille, comptage du nombre de cibles détectées simultanément présentes dans la zone à surveiller ; et
* en cas de cible(s) apparaissant dans une case sécurisée puis transitant vers une case autorisée lors d'une transition desdits états successifs, délivrance de ladite alerte en cas de changement du nombre de cibles compté avant et après ladite transition.

## Patentansprüche

1. Autonome Vorrichtung zur Zonenüberwachung, umfassend:
- einen passiven Infrarot-Sensor (10), der in der Lage ist, in einem vorbestimmten Punkt in Sichtweite der zu überwachenden Zone (ZS) montiert zu werden, wobei dieser Sensor eine Signalsequenz für die im Inneren der zu überwachenden Zone detektierte Wärme ausgibt, wobei dieser Sensor ein Sensor des Mehrfachzonentyps ist, der ein zweidimensionales Bild erzeugt, das von einem Raster aus Feldern gebildet ist, die elementaren Zonen (Zij) entsprechen, die der zu überwachenden Zone (ZS) benachbart sind, mit einem jeweiligen Wärmesignal für jedes Feld;
- Mittel (16) zur Analyse der Wärmesignale jedes Feldes des Rasters und zur Ausgabe, für jedes Signal der Sequenz und für jedes Feld des Rasters, eines Indikators für das Vorhandensein einer Wärmequelle, der für ein in dem entsprechenden Feld detektiertes Ziel repräsentativ ist; und
- einen Datenprozessor (20), der in der Lage ist, die von dem Sensor ausgegebenen Signale zu analysieren, um zwischen dem Vorhandensein und Nichtvorhandensein einer Wärmequelle im Inneren der zu überwachenden Zone in Abhängigkeit von vorbestimmten Kriterien zu unterscheiden und, bei Vorhandensein eines in wenigstens einem Feld des Rasters detektierten Ziels, am Ausgang (14) bedingt einen Warnhinweis auszugeben,
**dadurch gekennzeichnet, dass**:
- die Felder des Rasters eingeteilt sind in autorisierte Felder und in gesicherte Felder; und
- der Datenprozessor ausgestaltet ist für die bedingte Ausgabe des Warnhinweises bei Vorhandensein eines in wenigstens einem Feld des Rasters detektierten Ziels in Abhängigkeit von i) der Position des detektierten Ziels in dem Raster und ii) der Einteilung des Feldes, wo dieses Ziel detektiert wird, in autorisiertes Feld oder in gesichertes Feld.

2. Autonome Vorrichtung nach Anspruch 1, wobei:
- die Vorrichtung einen Datenspeicher (22) umfasst, der mit dem Prozessor per Schnittstelle verbunden ist und in der Lage ist, eine Historie der aufeinanderfolgenden Zustände der Indikatoren für das Vorhandensein einer Wärmequelle in dem Raster zu speichern; und
- der Datenprozessor ferner so ausgestaltet ist, dass er Folgendes ausführt:
* eine Verfolgung des detektierten Ziels durch Ausführen eines Nachbarfeld-Algorithmus mit Bestimmung des Pfades des verfolgten Ziels in dem Raster ausgehend von der Historie der aufeinanderfolgenden Zustände der Indikatoren für das Vorhandensein einer Wärmequelle in dem Raster; und
* bedingte Ausgabe des Warnhinweises in Abhängigkeit von i) dem Pfad des verfolgten Ziels und ii) der Einteilung der nacheinander durch das Ziel auf diesem Pfad belegten Felder in autorisierte Felder oder in gesicherte Felder.

3. Autonome Vorrichtung nach Anspruch 2, wobei der Datenprozessor so ausgestaltet ist, dass er den Warnhinweis bedingt ausgibt durch:
* bei einem Ziel, das in einem gesicherten Feld erscheint, Analyse der Umgebung dieses Feldes um zu bestimmen, ob in dem vorherigen Zustand des Rasters, der in dem Speicher gespeichert ist, das Ziel detektiert wurde:
- in einem gesicherten benachbarten Feld, mit in diesem Fall Ausgabe des Warnhinweises, oder
- in einem autorisierten benachbarten Feld, mit in diesem Fall Fehlen der Ausgabe eines Warnhinweises.

4. Autonome Vorrichtung nach Anspruch 2, wobei:
- die Felder des Rasters eingeteilt sind in autorisierte Felder, in gesicherte Felder und in Durchgangsfelder; und
- bei Fehlen eines früheren in dem Speicher gespeicherten Zustands, der Datenprozessor so ausgestaltet ist, dass er den Warnhinweis bedingt ausgibt durch:
* Ausgabe des Warnhinweises, wenn das Ziel in einem gesicherten Feld detektiert wird, oder
* Fehlen der Ausgabe eines Warnhinweises, wenn das Ziel in einem Durchgangsfeld detektiert wird.

5. Autonome Vorrichtung nach Anspruch 2, wobeibei einer Mehrzahl detektierter Felder der Datenprozessor so ausgestaltet ist, dass er den Warnhinweis bedingt ausgibt durch:
* für jeden der aufeinanderfolgenden Zustände der Indikatoren für das Vorhandensein einer Wärmequelle in dem Raster, Berechnen der Anzahl an detektierten Zielen, die in der zu überwachendem Zone gleichzeitig vorhanden sind; und
* bei einem Ziel/bei Zielen, das die in einem gesicherten Feld erscheint/erscheinen und dann bei einem Übergang der aufeinanderfolgenden Zustände in ein autorisiertes Feld übergeht/übergehen, Ausgabe des Warnhinweises bei einer Änderung der Anzahl an Zielen, die vor und nach dem Übergang berechnet wurde.

## Claims

1. An autonomous area monitoring device, comprising:
- a passive infrared sensor (10), adapted to be mounted at a predetermined point from which the area to be monitored (ZS) can be viewed, this sensor delivering a sequence of signals relating to the heat detected within the area to be monitored,
this sensor being a sensor of the multi-area type producing a two-dimensional image formed of a grid of squares corresponding to adjacent elementary areas (Zij) of the area to be monitored (ZS), with, for each square, a respective heat signal;
- means (16) for analysing the heat signals of each square of the grid and for delivering, for each signal of the sequence and for each square of the grid, an indicator of presence of a source of heat representative of a target detected in the corresponding square; and
- a data processor (20), adapted to analyse the signals delivered by the sensor to discriminate between presence and absence of a source of heat within the area to be monitored as a function of predetermined criteria, and, in the presence of a target detected in at least one square of the grid, to conditionally deliver as an output (14) an alert,
**characterized in that**:
- the squares of the grid are classified into authorized squares and secured squares; and
- the data processor is configured to conditionally deliver said alert in the presence of a target detected in at least one square of the grid as a function of i) the position on the grid of the detected target and ii) of the classification into authorized square or secured square of the square in which this target is detected.

2. The autonomous device of claim 1, wherein:
- the device comprises a data memory (22) interfaced with the processor, adapted to store a history of the successive states of the indicators of presence of a source of heat on the grid; and
- the data processor is further configured to perform:
* a tracking of the detected target, by implementation of an algorithm based on adjacent squares, with determination of the route of the tracked target, on the grid, based on said history of the successive states of the indicators of presence of a source of heat on the grid; and
* the conditional delivery of said alert as a function i) of said route of the tracked target and ii) of the classification into authorized squares or secured squares of the squares successively occupied by the target on this route.

3. The autonomous device of claim 2, wherein the data processor is configured to conditionally deliver said alert by:
* in case of a target appearing in a secured square, analysing the neighbourhood of this square to determine whether, in the previous state of the grid stored in the memory, said target had been detected:
• in a secured neighbour square with, in this case, delivery of the alert, or
• in an authorized neighbour square with, in this case, absence of delivery of an alert.

4. The autonomous device of claim 2, wherein:
- the squares of the grid are classified into authorized squares, secured squares and passing-through squares; and
- in case of absence of a previous state stored in the memory, the data processor is configured to conditionally deliver said alert by:
* delivery of the alert if the target is detected in a secured square, or
* absence of alert delivery if the target is detected in a passing-through square.

5. The autonomous device of claim 2, wherein, in case of a plurality of targets detected, the data processor is configured to conditionally deliver said alert by:
* for each of the successive states of the indicators of presence of a source of heat on the grid, counting the number of detected targets simultaneously present in the area to be monitored; and
* in the case of target(s) appearing in a secured square then moving to an authorized square at a transition between said successive states, delivery of said alert in case of change of the number of targets counted before and after said transition.
